# EUROPEAN PATENT APPLICATION

(11) **EP 2 120 038 A2**
(43) Date of publication of application: **18.11.2009**
(21) Application number: 09380071.2
(22) Date of filing: 02.04.2009
(51) Int. Cl.: G01N 21/25, G01N 21/53, G01N 21/88, G01N 33/50, C12M 1/34, G01N 33/487

(54) **Microtube reader device for the analysis of blood samples**

(30) Priority: 14.05.2008 ES 200801398
(71) Applicant: Grifols, S.A., 08005 Barcelona (ES)
(72) Inventor: Gonzalez Corbella, Benigno, 08010 Barcelona (ES)
(74) Representative: Durán Moya, Luis-Alfonso

(57) **Abstract**

The invention comprises taking colour pictures of backlighted analysis microtubes and using the colour information in the images to identify areas of the image which are relevant for interpreting the result of other possible artefacts, as well as detecting abnormal samples and/or reactions characterised by changes in the colour properties of the reaction.

## Description

This invention discloses a device for reading microtubes of the type incorporated into the so-called cards for the analysis of blood samples.

The use of microtubes for the analysis of samples, especially blood samples, is widespread in the clinical sector, and can be used to evaluate the results of the reaction of a sample in each individual microtube holding an appropriate gel, with the provision of appropriate reagents.

After the sample for analysis has been poured into the gel-containing microtube and the necessary reagents for the analysis required have been added, after a specified period of time and after the necessary processes have been carried out an expert clinician can evaluate the result of the test by visual inspection of the tube contents, observing whether any areas of different colour have formed in the mass of the gel, the distribution of colour masses, deposits at the bottom of the microtube, supernatant, etc.

However, the use of microtubes for the analysis of samples currently suffers from the need of an excessive intervention of expert personnel for the observation of the microtubes, above all when making the necessary evaluations of the results of the test. Likewise there is little systematic evaluation of the results obtained in the tests.

This invention is intended to overcome the disadvantages mentioned above by providing means to allow much better use of the possibility of reading microtube test results and thus making possible a higher level of automation in the process of reading and interpreting test results. The invention also makes microtube evaluation in advance easier.

In order to accomplish its objectives this invention is essentially based on a device essentially comprising the combination of a camera obtaining colour images designed to capture the image of the microtubes in a card located on a back lighted support provided with a pattern of marks specially intended to facilitate interpretation of the initial state of the microtube and interpretation of the results obtained. In this way the device according to the invention makes it possible, also in an automated way, to:
i) check and evaluate microtubes before use, for example for gel content or other characteristics.
ii) interpret results, in particular in the analysis of blood samples, by determining:
   - the results of haemolysis
   - evaluating lipaemia
   - the results of clotting
   - gel/supernatant transition
   - others.
iii) Detect anomalous samples, especially as regards colour intensity and the dispersion of light in the supernatant.

To sum up, this invention is based on the combination of a camera capturing colour images of microtubes for analysis, both before and after tests have been carried out on a sample, with the combination of a background grid or grids which can be superimposed on the microtube image by back lighting, thus providing a system for the analysis of blood samples in microtubes that is completely automated and is also capable of distinguishing false clotting not brought about by red cells. This invention therefore comprises the method of reading which is the subject matter of claims 1 to 3 and the reading device according to claims 4 to 7.

A number of explanatory drawings of embodiments of this invention and results in actual microtubes are provided by way of example, to provide a better understanding.

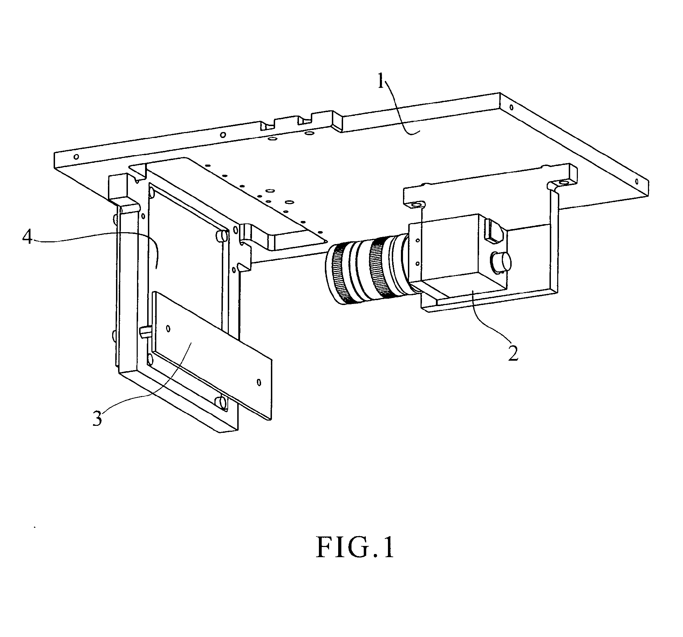

Figure 1 illustrates diagrammatically the arrangement of the essential means forming the device to which the invention relates.

Figure 2 shows diagrammatically a microtube indicating the areas inspected when determining the initial state of the microtube.

Figure 3 is a figure similar to Figure 2 showing the areas in which colour is detected and levels for final inspection of the microtube.

Figure 4 shows an illumination contrast pattern intended to be superimposed on the microtube at the time when images are obtained.

Figure 5 shows a series of photographs of haemolysed samples taken by the device so that the effect of haemolysis can be better understood.

Figure 6 shows a series of photographs of lipaemic samples to improve understanding of the effect of lipaemia.

Figure 7 shows an actual photograph of two microtubes in which it will be seen how the gel level can be assessed using the dark line located behind the microtube.

Figure 8 shows an actual photograph of two microtubes as an example of a negative reaction and a partly positive reaction.

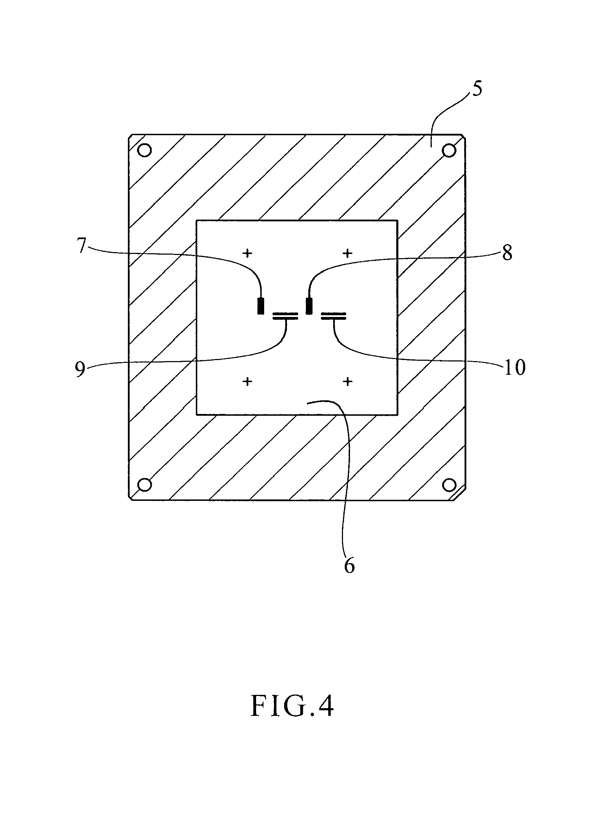

The drawings illustrate diagrammatically a microtube reader device for the analysis of blood samples according to this invention, in which the camera for obtaining colour images -2- is located above a supporting plate -1- with a back-lighting device, not shown in the figure, and a transparent or translucent frame -4- for positioning the patterns with specific grids for the purpose of automatic evaluation of the microtubes before the test and the results of the test performed. A small plate -3- reduces the effects of reflection on the images acquired produced in the areas which do not correspond to the microtubes. Figure 4 shows a pattern plate -5- which can be attached to frame -4- and bears a transparent or translucent zone -6- with the grid which is to be superimposed on the microtubes located in front of frame - 4- by back-lighting so that the marks in the pattern can provide guidelines for human or automatic interpretation of the test results. Merely by way of example marks are shown for two microtubes, each of which comprises a vertical mark, such as -7- and -8-, and pairs of horizontal marks - 9- and -10- so that the microtubes can be observed systematically both before and after the tests are carried out with the corresponding samples, thus together assisting the means for either manual, that is human, evaluation, or automatic evaluation, that is by the device itself, which can be incorporated into an automatic apparatus for the analysis of samples or to a reading apparatus.

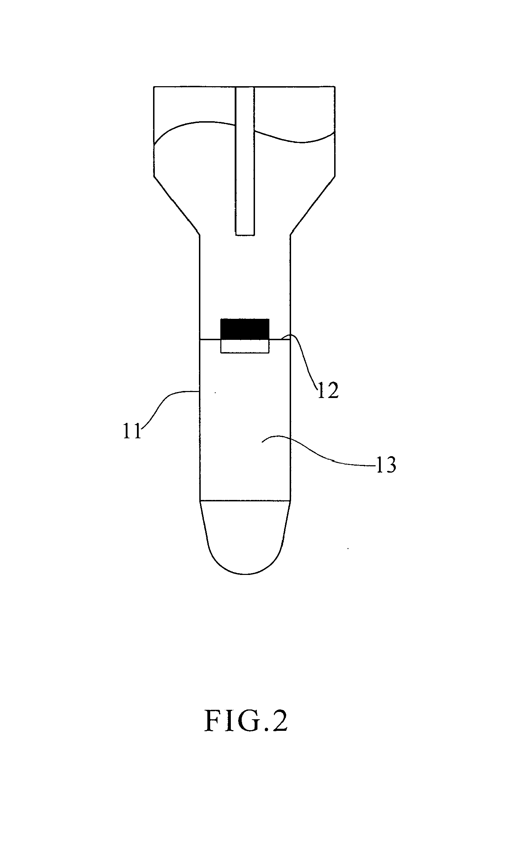

Through use of the device and method according to this invention it is possible to carry out an initial inspection of a microtube, as illustrated in Figure 2, in which is shown a microtube -11- in which the initial gel level -12-, which might have been adversely affected by incorrect pipetting or for other reasons, can be detected, and through which the uniformity of gel -13- can be detected, detecting for example the presence of bubbles.

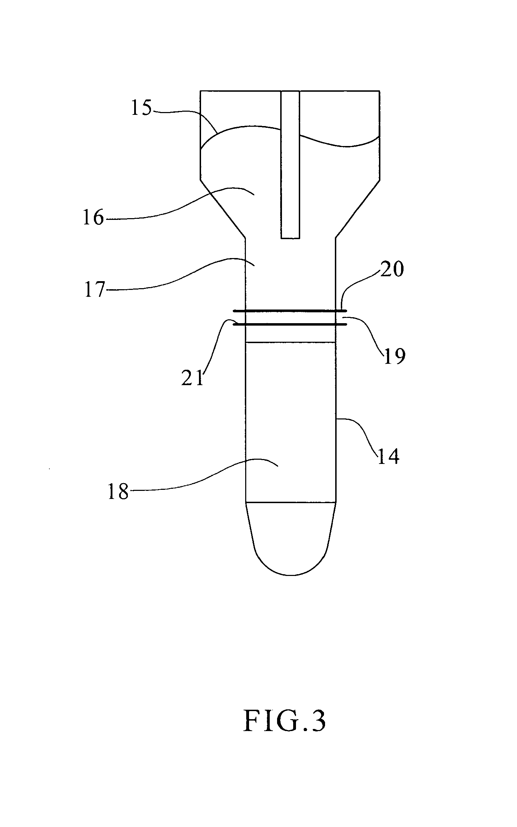

After the corresponding analyses have been performed, Figure 3 illustrates another microtube -14-which when the latter is finally inspected permits to reveal the total dose level in upper area -15- which might have been adversely affected by incorrect pipetting, as well as the detection of the colour intensity in areas -16-, -17- and -18-, and the turbidity in area -19-, including marks -20- and -21-.

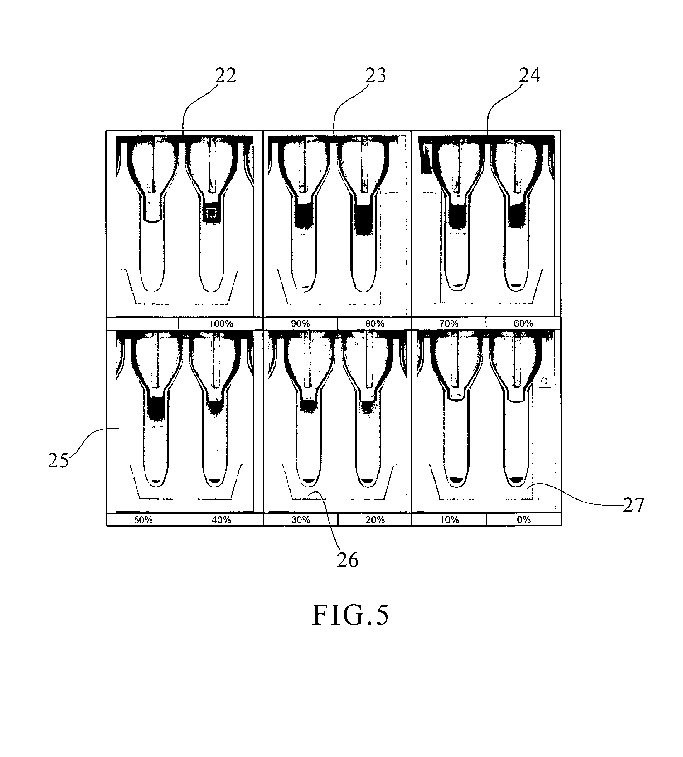

Figure 5 shows various photographs of haemolysed samples indicated by the numbers -22-, -23-, -24-, -25-, -26- and -27- respectively. Each of these show two microtubes with different evaluations of the haemolysed samples, showing the percentage of haemolysed cells, with a total volume of 10 µl. Variations from 100% in photograph - 22- to 0% in photograph -27- respectively will be seen, as a result of which this invention can be used to evaluate the percentages of haemolysed cells both manually, that is to say by humans, and in an automated way.

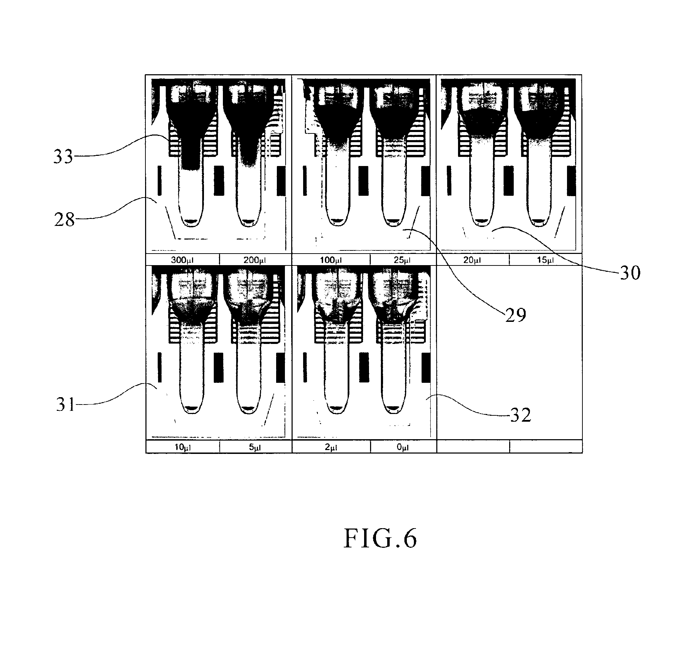

Figure 6 shows photographs of lipaemic samples -28-, -29-, -30-, -31- and -32- which provide an easy evaluation of lipaemia through the turbidity in the microtube contrasting against a background grid based on horizontal lines -33- or another similar grid. It will be seen from photograph -28- to photograph -32- that there is a clear gradation in turbidity with respect to the background lines, as a result of which the level of lipaemia in the blood sample analysed can be evaluated.

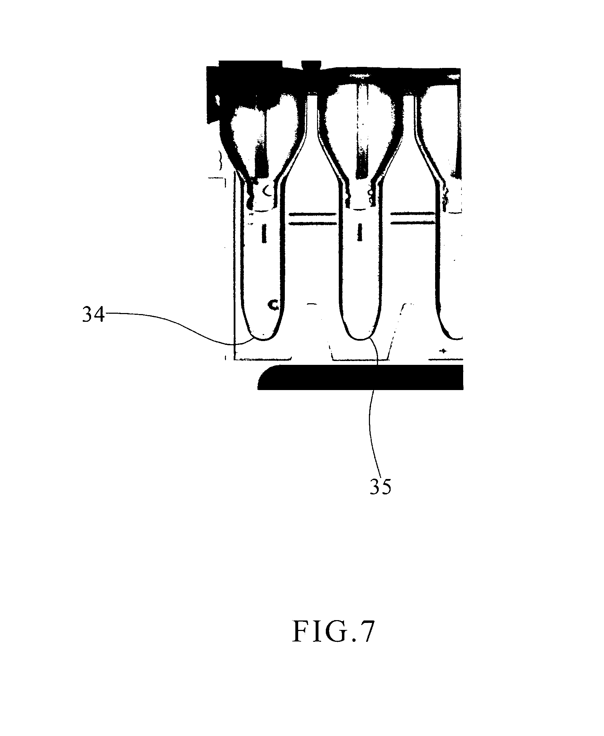

Figure 7 shows two microtubes -34- and -35- which can be used to check the level of gel using the dark line which appears in the pattern behind the microtube.

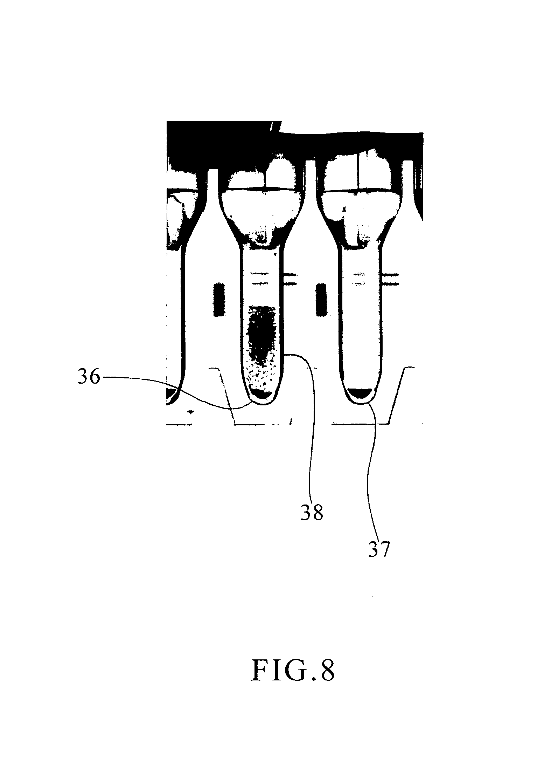

Figure 8 shows an actual photograph of two microtubes similar to those in Figure 7 in which microtubes -36- and -37- respectively show a zone -38- indicative of a negative reaction, and a partly positive reaction in microtube -37-.

It will therefore be seen that the invention also discloses the device intended for reading microtubes and analysing blood samples, as well as the method which more generally makes it possible to use the invention for automating the process, which essentially comprises reading the microtubes for the analysis of samples both before and after the tests are carried out by obtaining a colour image with simultaneous back-lighting of the microtube card having a pattern with a specific grid or grids which can be adjusted to the type of test carried out being placed in between, making it possible to automatically read the microtubes in the cards before use for analysis, above all in order to check that the parameters which establish that the microtube is initially in a proper condition lie within the envisaged range of values. The method likewise comprises evaluation of the colour of various areas of the microtube once a test has been performed on a sample, and other specific parameters to evaluate the results of specific types such as: haemolysis, turbidity (lipaemia) and others. The images obtained can be processed on the basis of the colour and light absorption (turbidity) information to transform the colour images captured by the device into data to evaluate the analysis in an automated way.

The invention is defined by the following claims, and it must be understood that many variants may be included within the scope of the invention by those skilled in the art on the basis of the information provided by this description, claims and drawings.

## Claims

1. A method for reading microtubes for the analysis of blood samples, **characterised in that** colour pictures of back-lighted analysis microtubes are taken and that the colour information in the images is used to distinguish relevant areas of the image to interpret the result of other possible artefacts as well as to detect anomalous samples and/or reactions **characterised by** changes in the colour properties of the reaction.

2. A method for reading microtubes for the analysis of blood samples according to claim 1, **characterised in that** the image obtained is evaluated visually or automatically in the presence of background grids for evaluating levels, light absorption, colour in reactions and the morphological distribution of the image of the reactions in the analysis microtubes.

3. A method for reading microtubes for the analysis of blood samples according to claim 2, **characterised in that** the initial characteristics of the microtube are evaluated to ensure that impurities, bubbles and other artefacts are absent and that levels are correct before the sample is received, by evaluating the degree to which a preferably vertical background grid appears/disappears.

4. A method for reading microtubes for the analysis of blood samples according to claim 2, **characterised in that** the turbidity of the reaction is evaluated using the degree to which a preferably horizontal grid appears/disappears.

5. A microtube reader device for the analysis of blood samples, **characterised in that** it has a camera to capture colour images of the analysis microtubes in a card fitted in support and has back-lighting means and intermediate grids between the illuminating source and the microtubes.

6. A microtube reader device for the analysis of blood samples according to claim 5, **characterised in that** the intermediate patterns between the lighting source and the microtubes may or may not be present in the area of interest of the image, by moving either the patterns, the microtubes or the camera or by any other equivalent means.

7. A microtube reader device for the analysis of blood samples according to claim 5, **characterised in that** the assembly supporting the camera and the support for the grid and the microtubes forms an assembly which can be fitted as a unit into apparatus for the automatic analysis of samples or in a separate reading equipment.
